(19) Europäisches Patentamt
European Patent Office
Office européen des brevets

(11) EP 3 043 192 A1

(12) **EUROPÄISCHE PATENTANMELDUNG**

(43) Veröffentlichungstag:
13.07.2016 Patentblatt 2016/28

(51) Int Cl.:
*G01S 15/58* (2006.01)    *G01S 7/523* (2006.01)
*G01S 15/62* (2006.01)    *G01S 15/88* (2006.01)
*G01S 15/52* (2006.01)    *G01S 7/54* (2006.01)

(21) Anmeldenummer: 15150531.0

(22) Anmeldetag: 08.01.2015

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Delphi International Operations
Luxembourg S.à r.l.
4940 Bascharage (LU)**

(72) Erfinder:
• **Krawietz, Manfred
51580 Reichshof (DE)**
• **Rott, Christoph
51109 Köln (DE)**

(74) Vertreter: **Manitz, Finsterwald & Partner GbR
Martin-Greif-Strasse 1
80336 München (DE)**

(54) **Ultraschallüberwachungsvorrichtung und -verfahren zur Bestimmung der Bewegungsrichtung und/oder der Bewegungsgeschwindigkeit eines Objekts**

(57) Die Erfindung bezieht sich auf eine Ultraschallüberwachungsvorrichtung zur Bestimmung der Bewegungsrichtung und/oder der Bewegungsgeschwindigkeit eines Objekts, umfassend einen Ultraschallsender und einen Ultraschallempfänger, wobei während des Betriebs der Ultraschallüberwachungsvorrichtung der Ultraschallsender ein Ultraschallsignal aussendet, das ausgesandte Ultraschallsignal an einem Objekt reflektiert wird und der Ultraschallempfänger das reflektierte Ultraschallsignal empfängt, gekennzeichnet durch einen Taktgenerator zur Erzeugung eines ersten Taktsignals und eines zweiten Taktsignals, wobei das erste Taktsignal und das zweite Taktsignal eine vorgegebene Phasendifferenz aufweisen, einen ersten Demodulator zur Demodulation des empfangenen Ultraschallsignals, wobei der erste Demodulator in Abhängigkeit vom Zustand des ersten Taktsignals aktiviert oder deaktiviert ist und ein erstes Ausgangssignal ausgibt, einen zweiten Demodulator zur Demodulation des empfangenen Ultraschallsignals, wobei der zweite Demodulator in Abhängigkeit vom Zustand des zweiten Taktsignals aktiviert oder deaktiviert ist und ein zweites Ausgangssignal ausgibt, und eine Auswerteeinheit zur Bestimmung der Bewegungsrichtung und/oder der Bewegungsgeschwindigkeit des Objekts anhand des ersten und des zweiten Ausgangssignals.

EP 3 043 192 A1

**Beschreibung**

Die vorliegende Erfindung betrifft eine Ultraschallüberwachungsvorrichtung zur Bestimmung der Bewegungsrichtung und/oder der Bewegungsgeschwindigkeit eines Objekts. Die Ultraschallüberwachungsvorrichtung weist einen Ultraschallsender und einen Ultraschallempfänger auf. Während des Betriebs der Ultraschallüberwachungsvorrichtung sendet der Ultraschallsender ein Ultraschallsignal aus, das ausgesandte Ultraschallsignal wird an einem Objekt reflektiert und der Ultraschallempfänger empfängt das reflektierte Ultraschallsignal.

Darüber hinaus betrifft die vorliegende Erfindung ein Kraftfahrzeug mit der vorstehend genannten Ultraschallüberwachungsvorrichtung.

Schließlich betrifft die Erfindung ein Ultraschallüberwachungsverfahren zur Bestimmung der Bewegungsrichtung und/oder der Bewegungsgeschwindigkeit eines Objekts.

Eine Ultraschallüberwachungsvorrichtung kann beispielsweise als Bestandteil eines Alarmsystems in einem Kraftfahrzeug eingesetzt werden. Sofern sich das Fahrzeug im Parkmodus befindet, überwacht die Ultraschallüberwachungsvorrichtung den Innenraum des Fahrzeugs und löst einen Alarm aus, wenn eine Bewegung im Innenraum detektiert wird. Während des Fahrmodus kann die Ultraschallüberwachungsvorrichtung zur Erkennung von Gesten des Fahrers verwendet werden, um beispielsweise das Schiebedach zu betätigen oder Leuchten an- oder auszuschalten. Ferner kann mit einer Ultraschallüberwachungsvorrichtung der Außenraum des Fahrzeugs überwacht werden. Von einem Benutzer mit Händen oder anderen Körperteilen ausgeführte Gesten können erkannt werden, um dadurch beispielsweise das Öffnen und Schließen des Kofferraums zu steuern.

Bei einer herkömmlichen Ultraschallüberwachungsvorrichtung werden Ultraschallwellen kontinuierlich mit einer Frequenz fo vom Ultraschallsender ausgestrahlt und das Echosignal der ausgesandten Ultraschallwellen wird vom Ultraschallempfänger aufgenommen. An dem Ultraschallempfänger überlagern sich dabei zwei Ultraschallsignalanteile. Der erste Ultraschallsignalanteil mit der Frequenz fo lässt sich auf Reflexion der ausgestrahlten Ultraschallwelle an statischen Objekten zurückführen. Der zweite Ultraschallsignalanteil mit einer Frequenz f_doppler wird durch eine Reflexion an einem bewegten Objekten verursacht und weist eine Dopplerverschiebung auf.

Die Überlagerung, d. h. die Superposition, von zwei Sinuswellen mit konstanten Amplituden, jedoch verschiedenen, eng beieinander liegenden Frequenzen verursacht Schwebungen. Das daraus resultierende, von dem Ultraschallempfänger empfangene Signal weist daher eine Amplituden- und Phasenmodulation auf.

Sofern wie bei bisherigen Lösungen die Einhüllende des von dem Ultraschallempfänger empfangenen Ultraschallsignals demoduliert wird, kann daraus nicht auf die Bewegungsrichtung eines sich bewegenden Objekts geschlossen werden.

Ein weiterer Nachteil bisheriger Ultraschallüberwachungsvorrichtungen besteht darin, dass eine von Störungen, wie z. B. Luftturbulenzen, verursachte Amplitudenmodulation irrtümlicherweise als Bewegung eines Objekts interpretiert werden kann.

Für den Fall, dass keine oder nur schlecht reflektierende statische Flächen vorhanden sind, enthält das Echo des ausgesandten Ultraschallsignals keinen Ultraschallsignalanteil mit der Frequenz fo. Obgleich der dopplerverschobene Ultraschallsignalanteil eine große Amplitude aufweist, weist in diesem Fall das am Ultraschallempfänger überlagerte Ultraschallsignal nur eine schlechte Amplitudenmodulation auf, was es für herkömmliche Ultraschallüberwachungsvorrichtungen erschwert oder gar unmöglich macht, die Bewegung eines Objekts zu detektieren.

Der Erfindung liegt daher die Aufgabe zugrunde, eine Ultraschallüberwachungsvorrichtung der eingangs genannten Art zu schaffen, welches in der Lage ist, die Bewegung eines Objekts von einer durch Störungen, wie z. B. Luftturbulenzen, verursachten Amplitudenmodulation zu unterscheiden. Ferner soll es die Ultraschallüberwachungsvorrichtung erlauben, auch wenn keine oder nur schlecht reflektierende statische Flächen vorhanden sind, die Bewegungsrichtung und/oder die Bewegungsgeschwindigkeit eines Objekts zuverlässig zu bestimmen.

Diese Aufgabe wird bei einer Ultraschallüberwachungsvorrichtung der eingangs genannten Art gelöst durch einen Taktgenerator zur Erzeugung eines ersten Taktsignals und eines zweiten Taktsignals, wobei das erste Taktsignal und das zweite Taktsignal eine vorgegebene Phasendifferenz aufweisen. Ferner sind ein erster Demodulator und ein zweiter Demodulator zur jeweiligen Demodulation des empfangenen Ultraschallsignals vorgesehen. Der erste Demodulator ist in Abhängigkeit vom Zustand des ersten Taktsignals aktiviert oder deaktiviert und gibt ein erstes Ausgangssignal aus. Der zweite Demodulator ist in Abhängigkeit vom Zustand des zweiten Taktsignals aktiviert oder deaktiviert und gibt ein zweites Ausgangssignal aus. Ferner umfasst die Ultraschallüberwachungsvorrichtung eine Auswerteeinheit zur Bestimmung der Bewegungsrichtung und/oder der Bewegungsgeschwindigkeit des Objekts anhand des ersten und des zweiten Ausgangssignals.

Die erfindungsgemäße Ultraschallüberwachungsvorrichtung ermöglicht es, die Bewegung eines Objekts von einer durch Störungen, wie z. B. Luftturbulenzen, verursachten Amplitudenmodulation zu unterscheiden. Außerdem erlaubt es die erfindungsgemäße Ultraschallüberwachungsvorrichtung, die Bewegungsrichtung und/oder die Bewegungsgeschwindigkeit des Objekts zuverlässig zu bestimmen, auch wenn keine oder nur schlecht reflektierende statische Flächen vorhanden sind.

Die Ultraschallüberwachungsvorrichtung kann eine Synchronisationseinheit zur Erzeugung eines Synchronisationssignals aus dem empfangenen Ultraschallsignal enthalten. Mit dem von der Synchronisationseinheit erzeugten Synchronisationssignal wird der Taktgenerator angesteuert. Der Taktgenerator führt die Phasen des ersten Taktsignals und des zweiten Taktsignals der Phase des Synchronisationssignals nach.

Insbesondere kann der Taktgenerator das erste Taktsignal und das zweite Taktsignal derart erzeugen, dass die Phase des Synchronisationssignals mittig zwischen der Phase des ersten Taktsignals und der Phase des zweiten Taktsignals liegt.

Gemäß einer Ausgestaltung erzeugt der Taktgenerator das von dem Ultraschallsender auszusendende Ultraschallsignal, wobei insbesondere die Frequenz des ersten Taktsignals und des zweiten Taktsignals gleich dem Quotienten aus der Frequenz des von dem Ultraschallsender auszusendenden Ultraschallsignals und einer positiven ganzen Zahl ist.

Eine weitere Ausgestaltung sieht vor, dass der erste Demodulator einen ersten Gleichrichter zur Gleichrichtung des empfangenen Ultraschallsignals aufweist, wobei der erste Gleichrichter in Abhängigkeit vom Zustand des ersten Taktsignals aktiviert oder deaktiviert ist, und/oder der zweite Demodulator einen zweiten Gleichrichter zur Gleichrichtung des empfangenen Ultraschallsignals aufweist, wobei der zweite Gleichrichter in Abhängigkeit vom Zustand des zweiten Taktsignals aktiviert oder deaktiviert ist.

Gemäß noch einer weiteren Ausgestaltung ist vorgesehen, dass der erste Demodulator ein erstes Tiefpassfilter zur Tiefpassfilterung eines von dem ersten Gleichrichter ausgegebenen Signals und einen ersten Schwellwertvergleicher zum Vergleichen eines von dem ersten Tiefpassfilter ausgegebenem Signals mit einem vorgegebenen Schwellwert aufweist, und/oder der zweite Demodulator ein zweites Tiefpassfilter zur Tiefpassfilterung eines von dem zweiten Gleichrichter ausgegebenen Signals und einen zweiten Schwellwertvergleicher zum Vergleichen eines von dem zweiten Tiefpassfilter ausgegebenem Signals mit dem vorgegebenen Schwellwert aufweist.

Zur Bestimmung der Bewegungsrichtung des Objekts kann die Auswerteeinheit derart ausgestaltet sein, dass sie anhand der Phasenbeziehung zwischen dem ersten und dem zweiten Ausgangssignal die Bewegungsrichtung des Objekts bestimmt. Insbesondere kann die Auswerteeinheit anhand der Position eines der ersten und zweiten Ausgangssignale zu dem Zeitpunkt, zu dem das andere der ersten und zweiten Ausgangsignale eine ansteigende oder abfallende Flanke aufweist, die Bewegungsrichtung des Objekts bestimmen.

Zur Bestimmung der Bewegungsgeschwindigkeit des Objekts kann die Auswerteeinheit derart ausgestaltet sein, dass sie die Bewegungsgeschwindigkeit des Objekts aus der Frequenz, mit der sich ein charakteristisches Merkmal in dem ersten und/oder zweiten Ausgangssignal wiederholt, bestimmt, wobei das charakteristische Merkmal insbesondere eine ansteigende oder abfallende Flanke ist.

Gemäß einer weiteren Ausgestaltung weisen das erste Taktsignal und das zweite Taktsignal jeweils einen ersten Zustand und einen zweiten Zustand auf. Der erste Demodulator ist während des ersten Zustands des ersten Taktsignals deaktiviert und während des zweiten Zustands des ersten Taktsignals aktiviert. Der zweite Demodulator ist während des ersten Zustands des zweiten Taktsignals deaktiviert und während des zweiten Zustands des zweiten Taktsignals aktiviert.

Ein erfindungsgemäßes Kraftfahrzeug umfasst eine Ultraschallüberwachungsvorrichtung, wie sie hierin beschrieben ist.

Ein erfindungsgemäßes Ultraschallüberwachungsverfahren dient zur Bestimmung der Bewegungsrichtung und/oder der Bewegungsgeschwindigkeit eines Objekts. Dazu wird ein Ultraschallsignal ausgesandt, das ausgesandte Ultraschallsignal wird an einem Objekt reflektiert und das reflektierte Ultraschallsignal wird empfangen. Ferner werden ein erstes Taktsignal und ein zweites Taktsignal erzeugt, wobei das erste Taktsignal und das zweite Taktsignal eine vorgegebene Phasendifferenz aufweisen. Das empfangene Ultraschallsignal wird in einem ersten Demodulator demoduliert, wobei der erste Demodulator in Abhängigkeit vom Zustand des ersten Taktsignals aktiviert oder deaktiviert wird und ein erstes Ausgangssignal ausgibt. Weiterhin wird das empfangene Ultraschallsignal in einem zweiten Demodulator demoduliert, wobei der zweite Demodulator in Abhängigkeit vom Zustand des zweiten Taktsignals aktiviert oder deaktiviert wird und ein zweites Ausgangssignal ausgibt. Die Bewegungsrichtung und/oder die Bewegungsgeschwindigkeit des Objekts werden anhand des ersten und des zweiten Ausgangssignals bestimmt.

Ausführungsbeispiele der Erfindung sind in den Zeichnungen dargestellt und werden nachfolgend beschrieben. Es zeigen schematisch

Fig. 1        eine schematische Darstellung einer Ultraschallüberwachungsvorrichtung und der von der Ultraschallüberwachungsvorrichtung ausgesandten und empfangenen Ultraschallsignale;

Fig. 2        ein Diagramm mit dem von der Ultraschallüberwachungsvorrichtung aus Fig. 1 empfangenen Ultraschallsignal;

Fig. 3        ein Blockschaltbild einer Ultraschallüberwachungsvorrichtung gemäß einem Ausführungsbeispiel der Erfindung;

Fig. 4      eine Simulation der Funktionsweise der Ultraschallüberwachungsvorrichtung bei einer Reflexion des Ultraschallsignals an einem statischen und einem bewegten Objekt;

Fig. 5A bis 5C      eine Simulation der Funktionsweise der Ultraschallüberwachungsvorrichtung bei einer Reflexion des Ultraschallsignals an einem statischen und einem bewegten Objekt mit einer Amplitudenmodulation der reflektierten Ultraschallsignale als Störung;

Fig. 6      eine Simulation der Funktionsweise der Ultraschallüberwachungsvorrichtung bei einer Reflexion des Ultraschallsignals an einem statischen und einem bewegten Objekt mit einer Amplitudenmodulation des an dem bewegten Objekt reflektierten Ultraschallsignals als Störung;

Fig. 7A und 7B      eine Simulation der Funktionsweise der Ultraschallüberwachungsvorrichtung bei einer Reflexion des Ultraschallsignals an zwei statischen Objekten mit einer Amplitudenmodulation der reflektierten Ultraschallsignale als Störung;

Fig. 8      eine Simulation der Funktionsweise der Ultraschallüberwachungsvorrichtung bei einer Reflexion des Ultraschallsignals an zwei statischen Objekten mit einer Amplitudenmodulation nur des an einem der Objekte reflektierten Ultraschallsignals als Störung;

Fig. 9      eine Simulation der Funktionsweise der Ultraschallüberwachungsvorrichtung bei einer Reflexion des Ultraschallsignals an schlecht reflektierenden statischen Oberflächen;

Fig. 10      ein Schaltbild eines Demodulators mit einer Gleichrichtereinheit, einer Steuereinheit und einem Tiefpassfilter gemäß einem Ausführungsbeispiel der Erfindung;

Fig. 11 und 12      Diagramme zur Veranschaulichung der Funktionsweise des Demodulators aus Fig. 10;

Fig. 13      ein Schaltbild einer Gleichrichtereinheit ohne Steuerung;

Fig. 14      Diagramme zur Veranschaulichung der Funktionsweise der Gleichrichtereinheit aus Fig. 13;

Fig. 15      Diagramme zur Veranschaulichung der Bestimmung der Bewegungsgeschwindigkeit eines Objekts;

Fig. 16      eine Simulation der Funktionsweise des Tiefpassfilters bei einer schwachen und einer starken Reflexion des Ultraschallsignals an einem bewegten Objekt;

Fig. 17      ein Schaltbild eines Demodulators mit einem Schwellwertvergleicher; und

Fig. 18      eine Simulation der Funktionsweise des Demodulators mit einer dynamischen Evaluation und einer Evaluation mit einem konstanten Schwellwert.

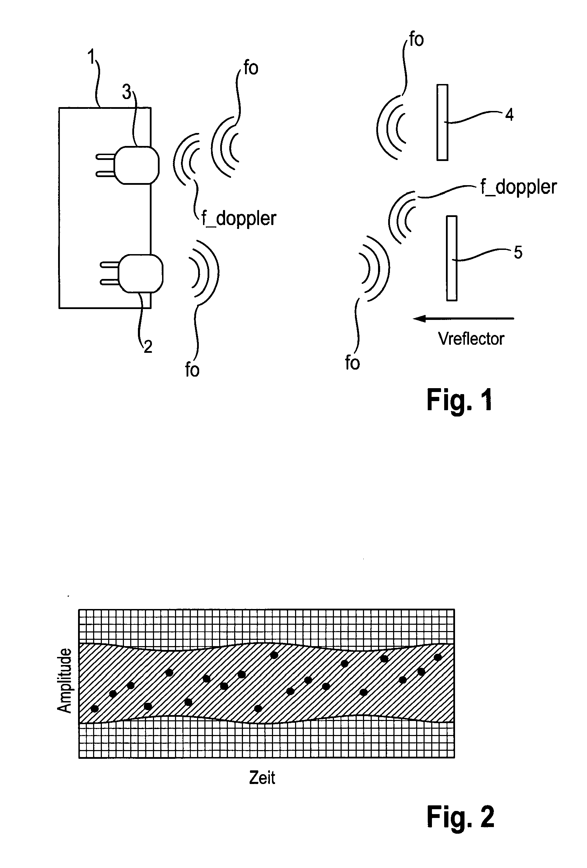

Fig. 1 zeigt schematisch eine Ultraschallüberwachungsvorrichtung 1 mit einem Ultraschallsender 2 und einem Ultraschallempfänger 3. Der Ultraschallsender 2 kann aus mehreren Sendeelementen bestehen. In der Umgebung der Ultraschallüberwachungsvorrichtung 1 sind ferner ein statisches, d. h. ortsfestes Objekt 4 sowie ein sich bewegendes Objekt 5 angeordnet. Das Objekt 5 bewegt sich mit der Geschwindigkeit Vreflector auf den Ultraschallempfänger 3 zu.
Der Ultraschallsender 2 sendet kontinuierlich ein Ultraschallsignal mit einer konstanten Frequenz fo aus. Während das von dem statischen Objekt 4 reflektierte Ultraschallsignal ebenfalls die Frequenz fo aufweist, ist das von dem sich bewegenden Objekt 5 reflektierte Ultraschallsignal dopplerverschoben und weist die Frequenz f_doppler auf. Am Ultraschallempfänger 3 überlagern sich die beiden reflektierenden Ultraschallsignale mit den Frequenzen fo und f_doppler. Da die Frequenzen fo und f_doppler eng beieinander liegen, wird eine Schwebung erzeugt. Für die Schwebungsfrequenz f_beat gilt f_beat = f_doppler - fo. Das resultierende, von dem Ultraschallempfänger 3 empfangene Ultraschallsignal ist in Fig. 2 dargestellt und enthält eine Amplituden- sowie Phasenmodulation.

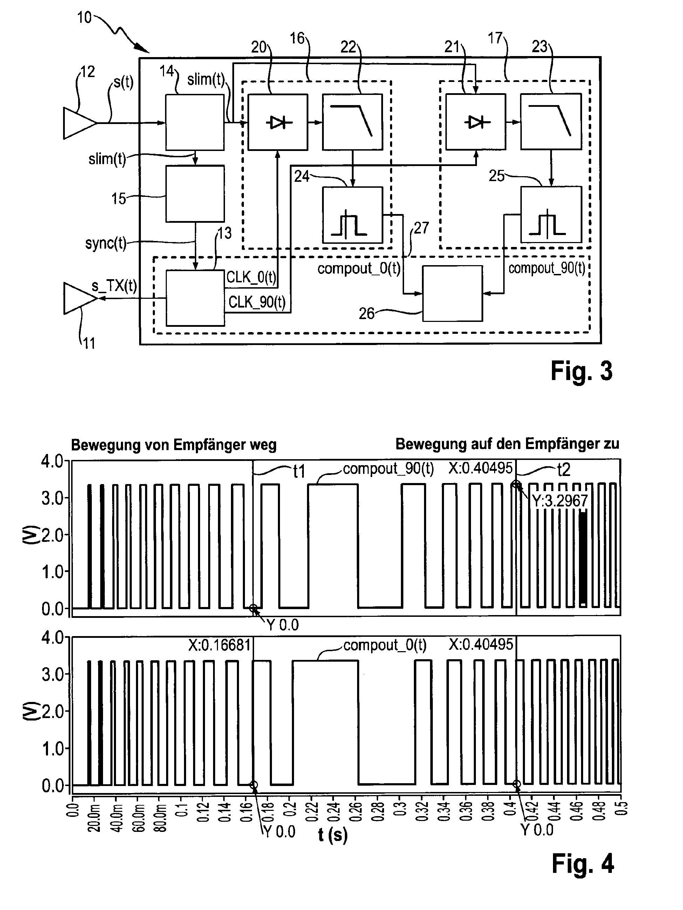

Fig. 3 zeigt ein Blockschaltbild einer Ultraschallüberwachungsvorrichtung 10 zur Bestimmung der Bewegungsrichtung und/oder der Bewegungsgeschwindigkeit eines Objekts als Ausführungsbeispiel der Erfindung. Die Ultraschallüberwachungsvorrichtung 10 kann insbesondere in ein Kraftfahrzeug eingebaut sein und dort beispielsweise zur Gestenerkennung und/oder als Bestandteil eines Alarmsystems eingesetzt werden.

Die Ultraschallüberwachungsvorrichtung 10 umfasst einen Ultraschallsender 11 zum Aussenden eines Ultraschallsignals und einen Ultraschallempfänger 12 zum Empfangen des Echosignals, d. h., der Ultraschallempfänger 12 empfängt das von einem Objekt zur Ultraschallüberwachungsvorrichtung 10 zurückreflektierte Ultraschallsignal.

Ein Taktgenerator 13 erzeugt ein kontinuierliches Ultraschallsignal s_TX(t) mit einer konstanten Frequenz fo, welches von dem Ultraschallsender 11 ausgesandt wird. Wie oben erläutert wurde, wird das von dem Ultraschallsender 11 ausgesandte Ultraschallsignal s_TX(t) an statischen und/oder bewegten Objekten reflektiert, und als Echo wird von dem Ultraschallempfänger 12 ein Ultraschallsignal s(t) empfangen. Das empfangene Ultraschallsignal s(t) kann die eng beieinander liegenden Frequenzen fo und f_doppler enthalten.

Das empfangene Ultraschallsignal s(t) wird in einen Limitierer 14 eingespeist, der eine Verstärkung und Amplitudenbegrenzung des Ultraschallsignals s(t) durchführt. Der Limitierer 14 vergrößert den dynamischen Bereich für die Eingangs-Signalamplituden im Vergleich zu herkömmlichen Ultraschallüberwachungsvorrichtungen, die auf reiner Amplituden-Demodulation basieren. Ein von dem Limitierer 14 ausgegebenes verstärktes und amplitudenbegrenztes Spannungssignal slim(t) wird einer Synchronisationseinheit 15 sowie Demodulatoren 16 und 17 zugeführt.

Die Synchronisationseinheit 15 erzeugt anhand des Spannungssignals slim(t) ein Synchronisationssignal sync(t), welches in einen Steuereingang des Taktgenerators 13 eingespeist wird.

Der Taktgenerator 13 erzeugt orthogonale Taktsignale CLK_0(t) und CLK_90(t). In dem vorliegenden Ausführungsbeispiel sind die Taktsignale CLK_0(t) und CLK_90(t) digitale Rechteckschwingungen mit der Frequenz fo. Alternativ könnten die Taktsignale CLK_0(t) und CLK_90(t) aber auch Frequenzen aufweisen, die in einem festen numerischen Verhältnis zur Frequenz fo stehen und insbesondere einen Quotienten aus der Frequenz fo und einem positiven ganzzahligen Teiler darstellen.

Der Taktgenerator 13 führt die Taktsignale CLK_0(t) und CLK_90(t) dem Synchronisationssignal sync(t) derart nach, dass die Phase des Synchronisationssignals sync(t) mittig zwischen den Phasen der Taktsignale CLK_0(t) und CLK_90(t) liegt. Zu Beginn der Signalauswertung zur Zeit t = t1 gilt folgende Phasenbeziehung zwischen den Taktsignalen CLK_0(t), CLK_90(t), dem empfangene Ultraschallsignal s(t) und dem verstärkten und amplitudenbegrenzten Spannungssignal slim(t):

| | |
|---|---|
| CLK_0(t1): | 0° |
| s(t1) und slim(t1): | 45° |
| CLK_90(t1): | 90° |

Die Taktsignale CLK_0(t) und CLK_90(t) werden als Steuersignale in die Demodulatoren 16 bzw. 17 eingespeist.

Die Demodulatoren 16, 17 weisen jeweils einen Halbwellen-Gleichrichter 20 bzw. 21, ein Tiefpassfilter 22 bzw. 23 und einen Schwellwertvergleicher 24 bzw. 25 auf, wobei diese Komponenten in den Demodulatoren 16 und 17 in der genannten Reihenfolge hintereinander geschaltet sind.

Die Halbwellen-Gleichrichter 20 und 21 empfangen das verstärkte und amplitudenbegrenzte Spannungssignal slim(t) und führen im aktivierten Zustand eine Halbwellen-Gleichrichtung des Spannungssignals slim(t) durch. Die HalbwellenGleichrichter 20 und 21 befindet sich im aktivierten Zustand und führen dementsprechend eine Gleichrichtung des Spannungssignals slim(t) durch, wenn das jeweilige Taktsignal CLK_0(t) bzw. CLK_90(t) den Zustand "1" (bzw. "high") aufweist. Wenn das jeweilige Taktsignal CLK_0(t) bzw. CLK_90(t) in den Zustand "0" (bzw. "low") springt, werden die Halbwellen-Gleichrichter 20 und 21 deaktiviert und führen dementsprechend keine Gleichrichtung des Spannungssignals slim(t) durch.

Die von den Halbwellen-Gleichrichtern 20 und 21 ausgegebenen Signale werden anschließend in den Tiefpassfiltern 22 bzw. 23 aufintegriert. In dem vorliegenden Ausführungsbeispiel liegt die -3 dB-Frequenz der Tiefpassfilter 22 und 23 bei ca. 600 Hz.

Die Amplituden der von den Tiefpassfiltern 22 und 23 ausgegebenen Signale werden in den Schwellwertvergleichern 24 bzw. 25 mit einem vorgegebenen Schwellwert verglichen und dadurch digitalisiert. Die Schwellwertvergleicher 24 und 25 geben Pulszüge als Ausgangssignale compout_0(t) bzw. compout_90(t) aus.

Die Ausgangssignale compout_0(t) bzw. compout_90(t) werden einer Auswerteeinheit 26 zugeführt, die die Bewegungsrichtung und/oder die Bewegungsgeschwindigkeit des Objekts, von welchem das ausgesandte Ultraschallsignal s_TX(t) reflektiert wurde, bestimmt. Anhand der Phasenbeziehung zwischen den Ausgangssignalen compout_0(t) und compout_90(t) kann darauf geschlossen werden, ob sich das Objekt radial auf den Ultraschallempfänger 12 zu oder von dem Ultraschallempfänger 12 weg bewegt. Die Frequenz der Ausgangssignale compout_0(t) und compout_90(t) lässt Rückschlüsse auf die Bewegungsgeschwindigkeit des Objekts zu. Die Bestimmung der Bewegungsrichtung und der Bewegungsgeschwindigkeit des Objekts wird weiter unten detaillierter erläutert.

In dem vorliegenden Ausführungsbeispiel sind der Taktgenerator 13 und die Auswerteeinheit 26 in einen Mikroprozessor 27 integriert.

Fig. 4 zeigt zur Veranschaulichung der Funktionsweise der Ultraschallüberwachungsvorrichtung 10 die Ergebnisse einer Simulation. In Fig. 4 sind die Ausgangssignale compout_0(t) und compout_90(t) der Demodulatoren 16 und 17 gegen die Zeit t aufgetragen.

Für die Simulation wurde angenommen, dass der Ultraschallsender 11 ein Ultraschallsignal s_TX(t) mit einer Frequenz fo = 40 kHz aussendet und dieses Signal sowohl an einem statischen Objekt als auch an einem bewegten Objekt reflektiert wird. Der am Ultraschallempfänger 12 empfangene Signalanteil des an dem statischen Objekt reflektierten Ultraschallsignals weist eine Amplitude von 0,5 V und eine Frequenz fo von 40 kHz auf. Der am Ultraschallempfänger 12 empfangene Signalanteil des an dem bewegten Objekt reflektierten Ultraschallsignals weist eine Amplitude von 0,5 V und eine Frequenz f_doppler auf, die innerhalb von 500 ms von 39,9 kHz bis 40,1 kHz ansteigt. Für das von dem Ultraschallempfänger 12 empfangene Ultraschallsignal s(t) ergibt sich daher die folgende Gleichung:

$$s(t) = 0{,}5V * \sin(2\pi * fo * t) + 0{,}5V * \sin(2\pi * f\_doppler * t) \qquad (1)$$

Die Bewegung des nicht stationären Objekts ist dabei so, dass sich dieses zu Beginn der Simulation von dem Ultraschallempfänger 12 weg bewegt und gegen Ende der Simulation auf den Ultraschallempfänger 12 zu bewegt.

Anhand der Phasenbeziehung zwischen den Ausgangssignalen compout_0(t) und compout_90(t) der Demodulatoren 16 und 17 lässt sich die Bewegungsrichtung des nicht stationären Objekts bestimmen. In dem vorliegenden Fall wird dazu die Position des Ausgangssignals compout_90(t) zu dem Zeitpunkt betrachtet, bei dem das Ausgangssignal compout_0(t) eine ansteigende Flanke aufweist. In Fig. 4 sind zwei derartige Zeitpunkte mit t1 und t2 markiert. Zum Zeitpunkt t1 befindet sich das Ausgangssignal compout_90(t) im Zustand "0" (bzw. "low"), d. h., das Objekt bewegt sich zum Zeitpunkt t1 vom Ultraschallempfänger 12 weg, wohingegen sich das Ausgangssignal compout_90(t) zum Zeitpunkt t2 im Zustand "1" (bzw. "high") befindet, woraus sich schließen lässt, dass sich das Objekt zum Zeitpunkt t2 auf den Ultraschallempfänger 12 zu bewegt.

Es ist aber auch denkbar, die Bewegungsrichtung des nicht stationären Objekts durch einen anderen Vergleich der Ausgangssignale compout_0(t) und compout_90(t) zu bestimmen. Beispielsweise kann der Zustand einer der beiden Ausgangssignale compout_0(t) und compout_90(t) zu dem Zeitpunkt betrachtet werden, bei dem das andere der beiden Ausgangssignale compout_0(t) und compout_90(t) eine ansteigende Flanke aufweist. Oder aber es kann die Reihenfolge betrachtet werden, in welcher die beiden Ausgangssignale compout_0(t) und compout_90(t) zwischen den beiden Zuständen "0" und "1" wechseln. Auch hieraus lässt sich die Bewegungsrichtung des Objekts ermitteln.

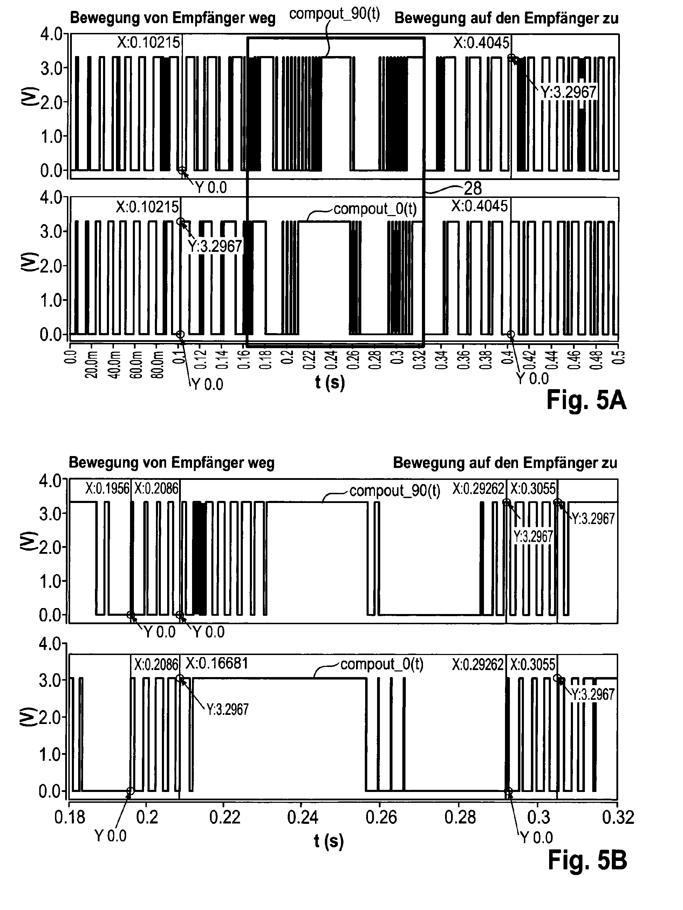

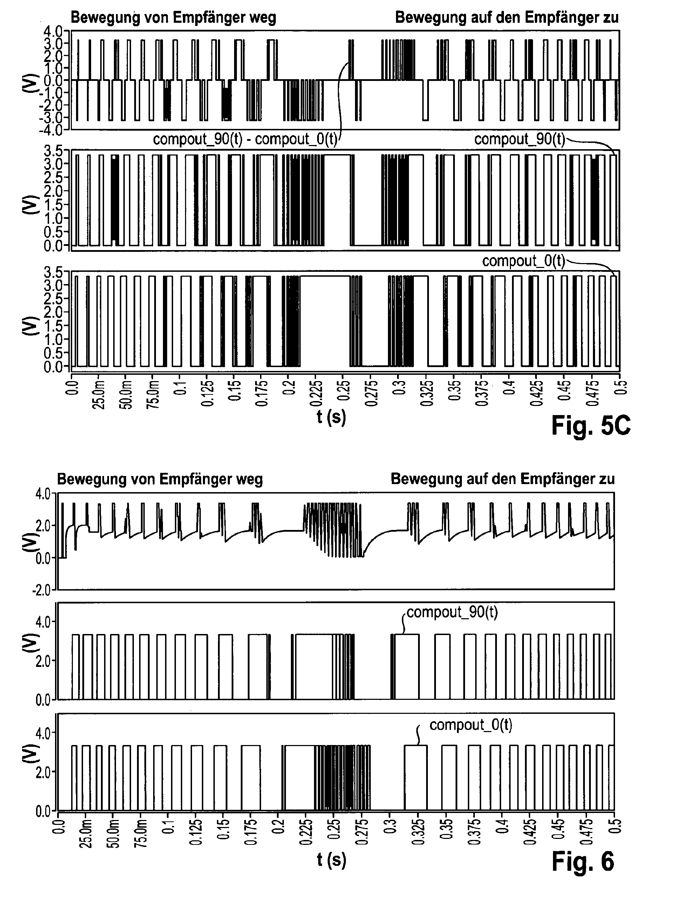

Fig. 5 bis 8 zeigen die Ergebnisse von Simulationen, anhand derer sich verifizieren lässt, wie robust die Ultraschallüberwachungsvorrichtung 10 gegenüber Luftturbulenzen ist. Luftturbulenzen verursachen Amplitudenmodulationen in dem vom Ultraschallempfänger 12 empfangenen Ultraschallsignal s(t). Eine robuste Ultraschallüberwachungsvorrichtung sollte die von Luftturbulenzen erzeugten Amplitudenmodulationen nicht als Bewegung eines Objekts fehlinterpretieren.

Für die Simulation, deren Ergebnisse in Fig. 5A, 5B und 5C dargestellt sind, wurden Reflexionen des vom Ultraschallsender 11 ausgestrahlten Ultraschallsignals s_TX(t) an einem statischen Objekt und einem sich bewegenden Objekt angenommen. Folglich setzt sich das am Ultraschallempfänger 12 empfangene Ultraschallsignal s(t) aus einem Signalanteil mit der Frequenz fo und einem Signalanteil mit der Frequenz f_doppler zusammen.

Dem betrachteten System wurde eine Störung hinzugefügt, wie sie beispielsweise durch Luftturbulenzen verursacht werden kann, indem beide Signalanteile mit einer Frequenz von 300 Hz amplitudenmoduliert wurden. Ansonsten wurden die gleichen Simulationsparameter wie für die in Fig. 4 dargestellte Simulation verwendet. Für das von dem Ultraschallempfänger 12 empfangene Ultraschallsignal s(t) ergibt sich daher die folgende Gleichung, wobei Φ1 und Φ2 Phasenwerte der jeweiligen Signalanteile zum Zeitpunkt t = 0 sind:

$$s(t) = (1 + (0{,}5 * \sin(2\pi * 300\ \text{Hz} * t))) * [0{,}5V * \sin(2\pi * fo * t + \Phi1)$$
$$+ 0{,}5V * \sin(2\pi * f\_doppler * t + \Phi2)] \qquad (2)$$

In Fig. 5A sind die simulierten Ausgangssignale compout_0(t) und compout_90(t) gegen die Zeit t aufgetragen. Die Bewegungsrichtung des bewegten Objekts lässt sich Fig. 5A zutreffend entnehmen. Bei einer Bewegung des Objekts von dem Ultraschallempfänger 12 weg fällt eine ansteigende Flanke des Ausgangssignals compout_0(t) mit dem Zustand "0" des Ausgangssignals compout_90(t) zusammen, und bei einer Bewegung des Objekts auf den Ultraschallempfänger 12 zu fällt eine ansteigende Flanke des Ausgangssignals compout_0(t) mit dem Zustand "1" des Ausgangssignals compout_90(t) zusammen. Dies ist in Fig. 5A zu zwei Zeitpunkten durch vertikale Linien verdeutlicht.

Innerhalb des in Fig. 5A eingezeichneten Ausschnitts 28 sind die Ausgangssignale compout_0(t) und compout_90(t) deutlich von der als Störung hinzugefügten Amplitudenmodulation überlagert. Dennoch lässt sich auch in diesem Bereich die Bewegungsrichtung des bewegten Objekts den Ausgangssignalen compout_0(t) und compout_90(t) entnehmen, wie Fig. 5B zeigt, in welcher der Ausschnitt 28 vergrößert dargestellt ist. Zur Verifizierung der Bewegungsrichtung sind in Fig. 5B zu vier Zeitpunkten, an denen das Ausgangssignal compout_0(t) eine ansteigende Flanke aufweist, vertikale Linien eingezeichnet.

In Fig. 5C ist neben den Ausgangssignalen compout_0(t) und compout_90(t) noch das Differenzsignal compout_90(t) - compout_0(t) gegen die Zeit aufgetragen. Das Differenzsignal kann mit einer Einhüllenden versehen werden, welche die Form einer Sinuskurve hat. Anhand der Periode dieser Sinuskurve lässt sich zu einem jeweiligen Zeitpunkt die Geschwindigkeit des bewegten Objekts in radialer Richtung zum Ultraschallempfänger 12 errechnen.

Weiterhin wurde eine Simulation für den Fall durchgeführt, dass Reflexionen des Ultraschallsignals s_TX(t) an einem statischen Objekt und einem bewegten Objekt auftreten und nur der Signalanteil mit der Frequenz f_doppler amplitudenmoduliert ist. Ferner beträgt die Amplitude des unmodulierten Signalanteils am Ultraschallempfänger 12 ein Zehntel der Amplitude des dopplerverschobenen Signalanteils. Alle anderen Simulationsparameter entsprechen den für die in Fig. 5A bis 5C gezeigten Simulation verwendeten Parametern. Für das von dem Ultraschallempfänger 12 empfangene Ultraschallsignal s(t) ergibt sich daher die folgende Gleichung:

$$s(t) = 1V * \sin(2\pi * f_0 * t + \Phi_1) + (1 + (0{,}5 * \sin(2\pi * 300\ Hz * t))) * 0{,}1V$$
$$* \sin(2\pi * f\_doppler * t + \Phi_2) \tag{3}$$

In Fig. 6 sind als Ergebnisse der Simulation in den unteren beiden Diagrammen die Ausgangssignale compout_0(t) und compout_90(t) gegen die Zeit t aufgetragen. Das typische Muster dieser Ausgangssignale wurde durch die Amplitudenmodulation nur für geringe Bewegungsgeschwindigkeiten des Objekts unbrauchbar gemacht, ansonsten lassen sich die Bewegungsrichtung und Bewegungsgeschwindigkeit des Objekts aus den Ausgangssignalen compout_0(t) und compout_90(t) rekonstruieren. Zum Vergleich zeigt das oberste Diagramm in Fig. 6 eine reine Ampliuden-Demodulation, wie sie bei herkömmlichen Ultraschallüberwachungsvorrichtungen eingesetzt wird. Aus dem obersten Diagramm von Fig. 6 lässt sich jedoch keine Information zur Bewegungsrichtung und Bewegungsgeschwindigkeit des Objekts extrahieren.

Ferner wurden noch Simulationen für den Fall durchgeführt, dass Reflexionen des Ultraschallsignals s_TX(t) an statischen Objekten, nicht aber an bewegten Objekten auftreten. Es wurde untersucht, ob sich die Ergebnisse dieser Simulationen signifikant von den in Fig. 5 und 6 gezeigten Simulationsergebnissen unterscheiden.

Zunächst wurde der Fall betrachtet, dass sich aufgrund von Reflexion an zwei statischen Objekten am Ultraschallempfänger 12 zwei Signalanteile mit der Frequenz f_0 überlagern, wobei die zwei Signalanteile gleiche Amplituden, aber unterschiedliche Phasen aufweisen. Ferner sind beide Signalanteile amplitudenmoduliert. Für das von dem Ultraschallempfänger 12 empfangene Ultraschallsignal s(t) ergibt sich die folgende Gleichung:

$$s(t) = (1 + (0{,}5 * \sin(2\pi * 300\ Hz * t))) * [0{,}5V * \sin(2\pi * f_0 * t + \Phi_1)$$
$$+ (0{,}5V * \sin(2\pi * f_0 * t + \Phi_2)] \tag{4}$$

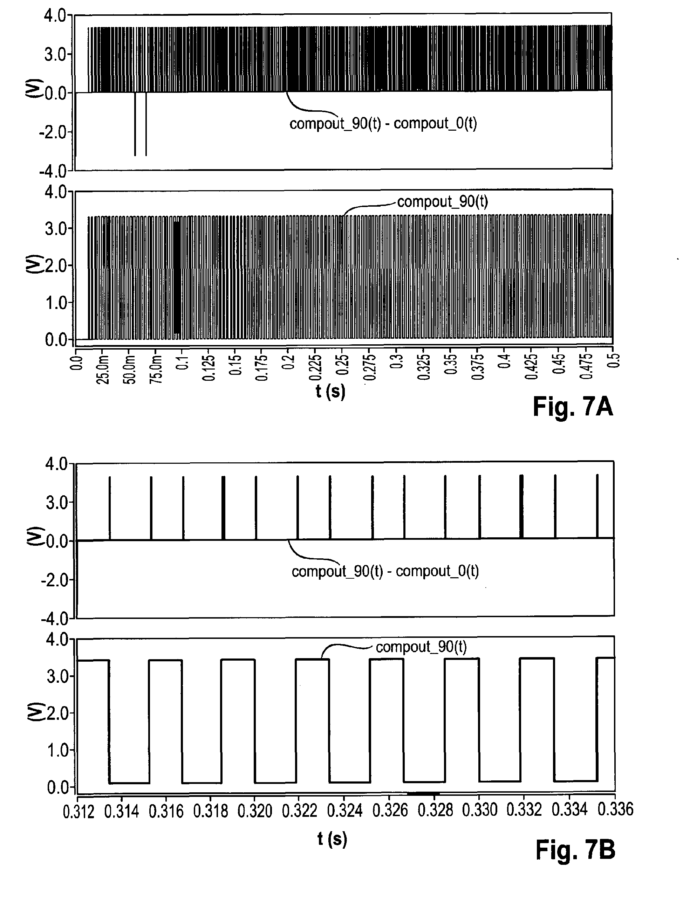

Die Ergebnisse dieser Simulation sind in Fig. 7A und 7B gezeigt, wobei in Fig. 7B ein Ausschnitt der Diagramme von Fig. 7A vergrößert dargestellt ist.

Ohne Störung hätten die Ausgangssignale compout_90(t) und compout_0(t) die gleiche Phase, und das Differenzsignal compout_90(t) - compout_0(t) wäre demnach Null. Aufgrund der als Störung in die Simulation eingefügten Amplitudenmodulation ist die Phasenbeziehung zwischen den Ausgangssignalen compout_90(t) und compout_0(t) jedoch in dem vorliegenden Fall beeinträchtigt und das Differenzsignal compout_90(t) - compout_0(t) alterniert, wie Fig. 7A und 7B zeigen.

Fig. 7A und 7B zeigen weiterhin, dass das Differenzsignal compout_90(t) - compout_0(t) für ein Ultraschallsignal s(t), welches nur Signalanteile mit der Frequenz f_0 enthält, stark asymmetrisch und in dem vorliegenden Fall meist positiv ist. Im Gegensatz dazu würde ein Ultraschallsignal s(t), welches auch einen Signalanteil mit einer Frequenz f_doppler enthält, zu einer Phasenverschiebung zwischen den Ausgangssignalen compout_90(t) und compout_0(t) führen, so dass das Differenzsignal compout_90(t) - compout_0(t) sich deutlich von dem in Fig. 7A gezeigten Differenzsignal compout_90(t) - compout_0(t) unterscheiden würde und um Null mit einer Frequenz $f_{osc} = f_0 - f\_doppler$ oszillieren würde.

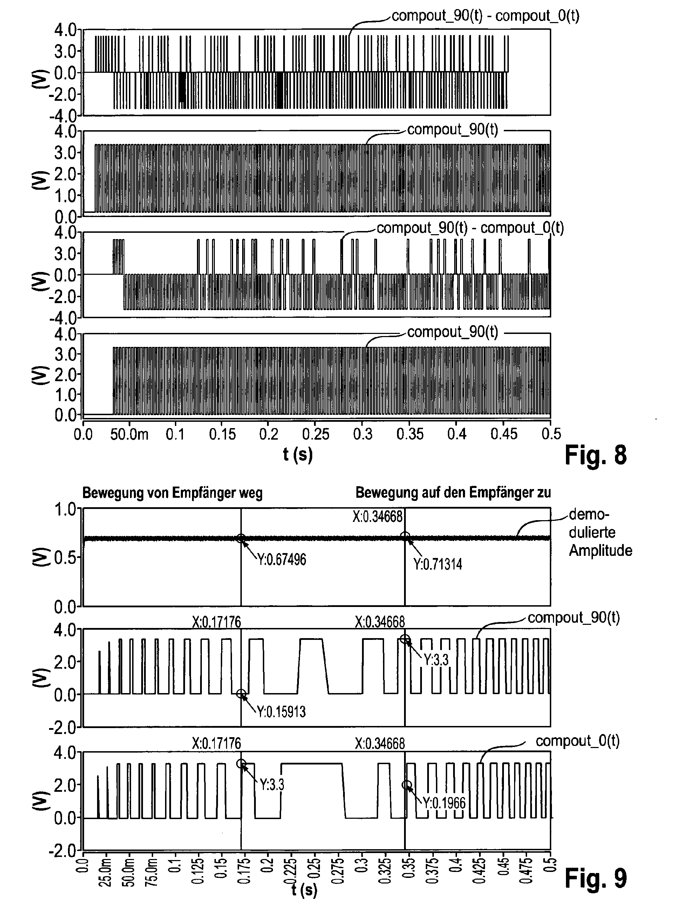

In Fig. 8 sind die Ergebnisse einer weiteren Simulation gezeigt, die weitgehend der in Fig. 7A und 7B gezeigten Simulation entspricht, jedoch weist in dem vorliegenden Fall nur einer der zwei Signalanteile mit der Frequenz f_0 eine Amplitudenmodulation auf. In den beiden oberen Diagrammen von Fig. 8 ist die Amplitude des unmodulierten Signalanteils des Ultraschallsignals s(t) gleich der Amplitude des amplitudenmodulierten Signalanteils des Ultraschallsignals s(t). Für das von dem Ultraschallempfänger 12 empfangene Ultraschallsignal s(t) ergibt sich für diesen Fall die folgende Gleichung:

$$s(t) = 0{,}5V * sin(2\pi*fo*t + \Phi1) + (1 + (0{,}5*sin(2\pi*300\ Hz*t))) * 0{,}5V$$
$$* sin(2\pi*fo*t + \Phi2) \tag{5}$$

In den beiden unteren Diagrammen von Fig. 8 ist die Störung wesentlich kleiner. Dort ist die Amplitude des unmodulierten Signalanteils des Ultraschallsignals s(t) gleich einem Zehntel der Amplitude des amplitudenmodulierten Signalanteils des Ultraschallsignals s(t). Für das von dem Ultraschallempfänger 12 empfangene Ultraschallsignal s(t) ergibt sich in diesem Fall die folgende Gleichung:

$$s(t) = 1V * sin(2\pi*fo*t + \Phi1) + (1 + (0{,}5*sin(2\pi*300\ Hz*t))) * 0{,}1V$$
$$* sin(2\pi*fo*t + \Phi2) \tag{6}$$

Aufgrund der Amplitudenmodulation ist die Phasenbeziehung zwischen den Ausgangssignalen compout_90(t) und compout_0(t) gestört und alterniert. Wie Fig. 8 zeigt, ist das Differenzsignal compout_90(t) - compout_0(t) bei beiden Simulationen stark asymmetrisch und meist negativ. Im Gegensatz dazu würde ein Ultraschallsignal s(t), welches auch einen Signalanteil mit einer Frequenz f_doppler enthält, zu einer Phasenverschiebung zwischen den Ausgangssignalen compout_90(t) und compout_0(t) führen, so dass das Differenzsignal compout_90(t)-compout_0(t) um Null mit einer Frequenz fosc = fo - f_doppler oszillieren würde.

Fig. 9 zeigt die Ergebnisse einer weiteren Simulation, bei der von schlecht reflektierenden statischen Oberflächen ausgegangen wurde. Es wurde angenommen, dass der am Ultraschallempfänger 12 empfangene Signalanteil des an dem statischen Objekt reflektierten Ultraschallsignals eine Amplitude von 0 V und eine Frequenz fo von 40 kHz aufweist. Der am Ultraschallempfänger 12 empfangene Signalanteil des an dem bewegten Objekt reflektierten Ultraschallsignals weist eine Amplitude von 0,5 V und eine Frequenz f_doppler auf, die innerhalb von 500 ms von 39,9 kHz bis 40,1 kHz ansteigt. Die Gleichung für das von dem Ultraschallempfänger 12 empfangene Ultraschallsignal s(t) lautet wie folgt:

$$s(t) = 0V * sin(2\pi*fo*t) + 0{,}5V * sin(2\pi*f\_doppler(t)*t) \tag{7}$$

Das oberste Diagramm von Fig. 9 zeigt eine reine Amplituden-Demodulation, wie sie bei herkömmlichen Ultraschallüberwachungsvorrichtungen eingesetzt wird. In dem vorliegenden Fall lässt sich mit Hilfe der reinen Amplituden-Demodulation keinerlei Information über die Bewegungsrichtung oder Bewegungsgeschwindigkeit des bewegten Objekts gewinnen. Sofern jedoch die Phasen bei der Demodulation berücksichtigt werden, können diese Informationen aus dem Ultraschallsignal extrahiert werden. Wie die beiden unteren Diagramme von Fig. 9 zeigen, fällt für eine Bewegung von dem Ultraschallempfänger 12 weg eine ansteigende Flanke des Ausgangssignals compout_0(t) mit dem Zustand "0" des Ausgangssignals compout_90(t) zusammen, und für eine Bewegung in Richtung des Ultraschallempfängers 12 fällt eine ansteigende Flanke des Ausgangssignals compout_0(t) mit dem Zustand "1" des Ausgangssignals compout_90(t) zusammen.

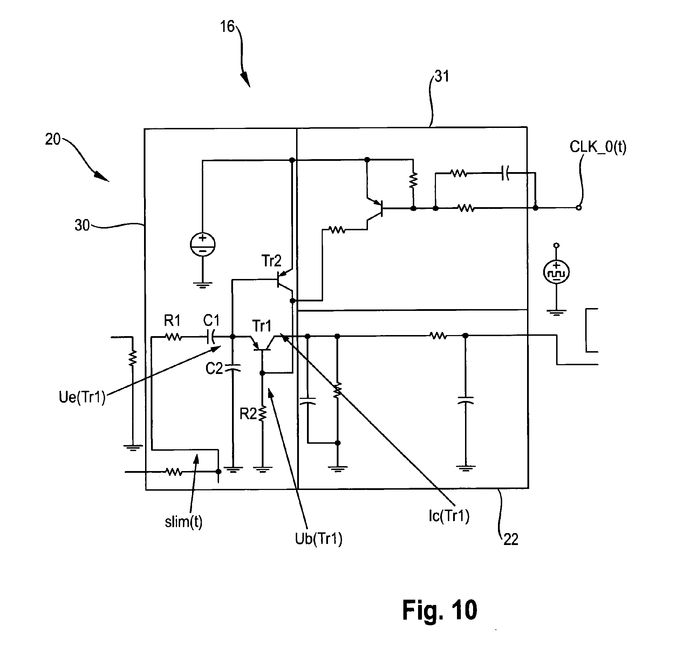

Fig. 10 zeigt ein Schaltbild des Demodulators 16 als ein Ausführungsbeispiel. In Fig. 10 sind der Halbwellengleichrichter 20 sowie das Tiefpassfilter 22 dargestellt. Der Halbwellengleichrichter 20 besteht aus einer Gleichrichtereinheit 30 und einer Steuereinheit 31.

Die Gleichrichtereinheit 30 führt die Gleichrichtung des von dem Limitierer 14 ausgegebenen, verstärkten und amplitudenbegrenzten Spannungssignals slim(t) durch. Dazu enthält die Gleichrichtereinheit 30 die Transistoren Tr1, Tr2, die Kondensatoren C1, C2 und die Widerstände R1, R2, die wie in Fig. 10 gezeigt miteinander verschaltet sind. Der Eingang der Gleichrichtereinheit 30, an dem das verstärkte und amplitudenbegrenzte Spannungssignal slim(t) anliegt, ist durch den Kondensator C1 AC-gekoppelt.

Die Steuereinheit 31 erhält als Steuersignal das Taktsignal CLK_0(t) und aktiviert bzw. deaktiviert die Gleichrichtereinheit 30. Im Zustand "0" (bzw. "low") des Taktsignals CLK_0(t) ist die Gleichrichtereinheit 30 deaktiviert (bzw. ausgeschaltet) und im Zustand "1" (bzw. "high") des Taktsignals CLK_0(t) ist die Gleichrichtereinheit 30 aktiviert (bzw. eingeschaltet).

Der Demodulator 17 kann in der gleichen Weise wie der Demodulator 16 aufgebaut sein. In diesem Fall würde jedoch das Taktsignal CLK_90(t) als Steuersignal dienen.

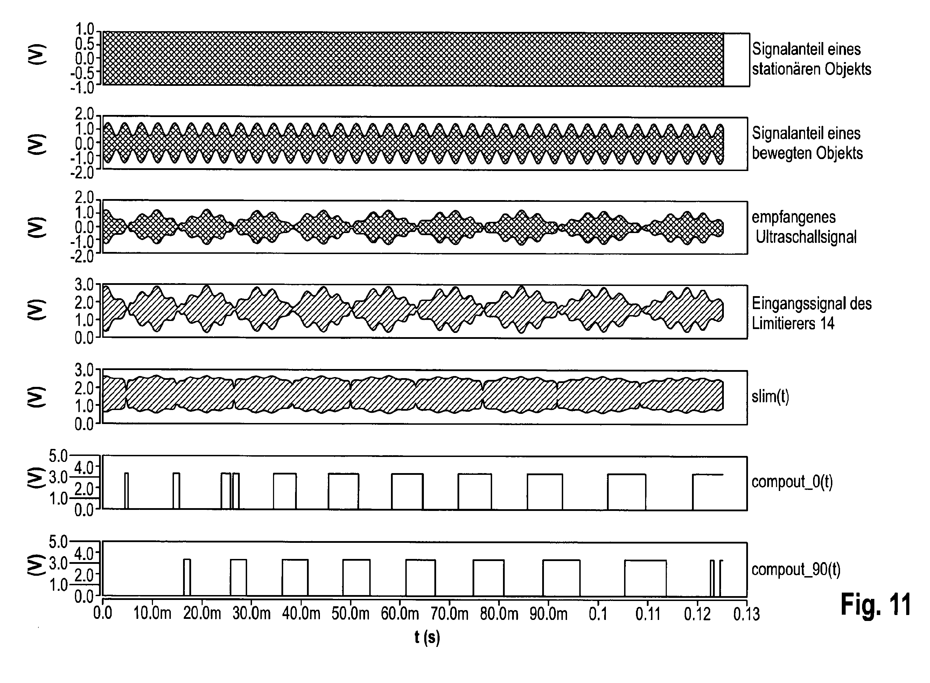

Zur Veranschaulichung der Funktionsweise des Demodulators 16 sind in Fig. 11 untereinander der am Ultraschallempfänger 12 empfangene Signalanteil des an einem statischen Objekt reflektierten Ultraschallsignals, der am Ultraschallempfänger 12 empfangene Signalanteil des an einem bewegten Objekt reflektierten Ultraschallsignals, eine am Ultraschallempfänger 12 auftretende Überlagerung der beiden vorstehenden Signalanteile, das Eingangssignal des Limitierers 14, das vom Limitierer 14 ausgegebene Spannungssignal slim(t) sowie die Ausgangssignale compout_0(t) und compout_90(t) gegen die Zeit t aufgetragen.

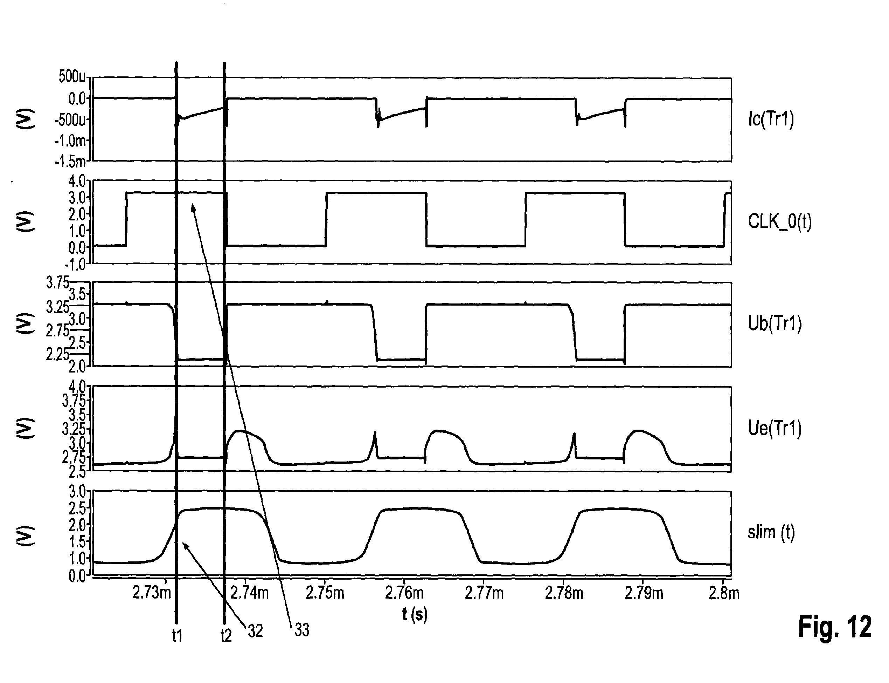

Weiterhin sind in Fig. 12 der Kollektorstrom Ic(Tr1) des Transistors Tr1, der in das Tiefpassfilter 22 fließt, das Taktsignal CLK_0(t), die Spannung Ub(Tr1) an der Basis des Transistors Tr1, die Spannung Ue(Tr1) am Emitter des Transistors Tr1 und das vom Limitierer 14 ausgegebene Spannungssignal slim(t) gegen die Zeit t aufgetragen.

Die Gleichrichtung in der Gleichrichtereinheit 30 startet grundsätzlich mit der positiven Halbwelle des Spannungssignals slim(t) und endet mit der negativen Halbwelle des Spannungssignals slim(t). Ferner bestimmt das Taktsignal CLK_0(t), ob die Gleichrichtereinheit 30 aktiviert oder deaktiviert ist.

In den Diagrammen von Fig. 12 kennzeichnen vertikale Linien die Zeitpunkte t1 und t2. Zum Zeitpunkt t1 beginnt eine positive Halbwelle des Spannungssignals slim(t), wie dies durch einen Pfeil 32 gekennzeichnet ist. Gleichzeitig befindet sich das Taktsignal CLK_0(t) im Zustand "1 ", wie ein Pfeil 33 zeigt. Daher beginnt zum Zeitpunkt t1 die Gleichrichtung, während der ein Kollektorstrom Ir(Tr1) von der Gleichrichtereinheit 30 in das Tiefpassfilter 22 fließt. Zum Zeitpunkt t2 wechselt das Taktsignal CLK_0(t) in den Zustand "0", wodurch die Gleichrichtereinheit 30 deaktiviert wird und die Gleichrichtung endet.

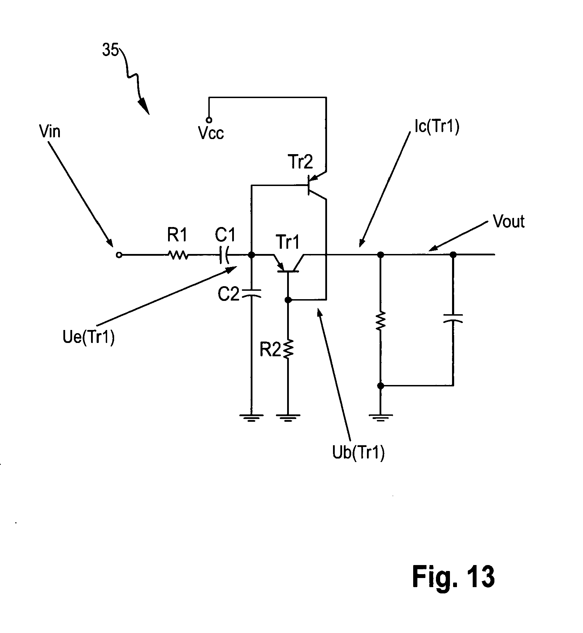

Fig. 13 zeigt ein Schaltbild einer Gleichrichtereinheit 35 mit einem nachgeschalteten Tiefpassfilter. Die Gleichrichtereinheit 35 wird im Unterschied zu der in Fig. 10 dargestellten Gleichrichtereinheit 30 ohne Steuereinheit betrieben. Ansonsten ist der Aufbau der Gleichrichtereinheit 35 sehr ähnlich zum Aufbau der Gleichrichtereinheit 30.

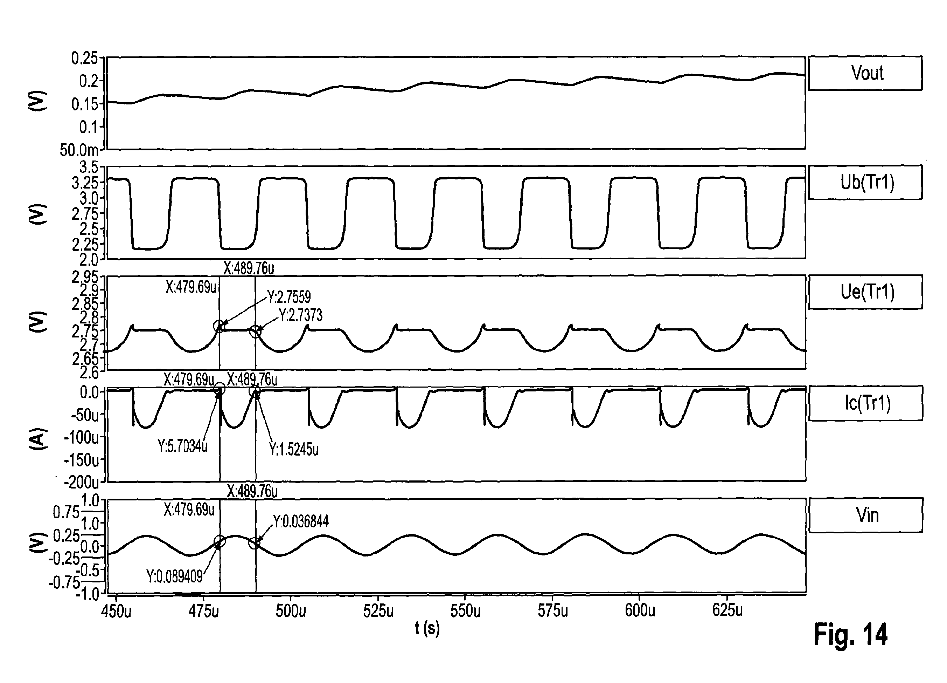

Zur Veranschaulichung der Funktionsweise der Gleichrichtereinheit 35 sind in Fig. 14 untereinander die Ausgangsspannung Vout des Tiefpassfilters, die Spannung Ub(Tr1) an der Basis des Transistors Tr1, die Spannung Ue(Tr1) am Emitter des Transistors Tr1, der Kollektorstrom Ic(Tr1) des Transistors Tr1 und die Eingangsspannung Vin der Gleichrichtereinheit 35 gegen die Zeit t aufgetragen.

Unter Gleichgewichts- bzw. Startbedingungen fließt ein Basisstrom des Transistors Tr2 in den Emittereingang des Transistors Tr1. Für den Kollektorstrom Ic(Tr2) des Transistors Tr2 gilt Ic(Tr2) * R2 = Ub(Tr1). Die Spannungsdifferenz zwischen Emitter und Basis des Transistors Tr1 wird so gehalten, dass der Basisstrom des Transistors Tr2 dem Emitterstrom des Transistors Tr1 entspricht.

Bei einer Gleichrichtung in der Gleichrichtereinheit 35 wird durch eine positive Halbwelle der Eingangsspannung Vin die Spannung Ue(Tr1) am Emitter der Transistors Tr1 erhöht, wodurch der Transistor Tr2 weniger leitend wird und sein Kollektorstroms sich verringert. Dies verringert die Spannung Ub(Tr1) an der Basis des Transistors Tr1, wodurch der Transistor Tr1 leitend wird und einen Stromfluss vom Eingang der Gleichrichtereinheit 35 zum Tiefpassfilter ermöglicht.

Eine negative Halbwelle der Eingangsspannung Vin verringert die Spannung Ue(Tr1) am Emitter der Transistors Tr1, wodurch der Transistor Tr2 stärker leitet und sein Kollektorstrom sich erhöht. Dadurch steigt die Spannung Ub(Tr1) an der Basis des Transistors Tr1, wodurch der Transistor Tr1 in den nicht-leitenden Zustand gebracht wird und demzufolge einen Stromfluss vom Eingang der Gleichrichtereinheit 35 zum Tiefpassfilter unterbindet.

Nachfolgend wird die Bestimmung der Bewegungsgeschwindigkeit des Objekts, an dem das vor der Reflexion die Frequenz fo aufweisende Ultraschallsignal reflektiert wird, erläutert. Für den Fall, dass sich das Objekt auf den Ultraschallempfänger 12 zu bewegt, gilt für die Frequenzverschiebung Δf des reflektierten Ultraschallsignals mit der Frequenz f_doppler gegenüber der Frequenz fo folgende Gleichung:

$$\Delta f = 2 * fo * v / (c - v) \qquad (8)$$

In Gleichung (8) geben v die Geschwindigkeit des Objekts und c die Schallgeschwindigkeit, die in trockener Luft von 20 °C ca. 343 m/s beträgt, an. Ferner gilt f_doppler = fo + Δf.

Für den Fall, dass sich das Objekt von dem Ultraschallempfänger 12 weg bewegt, gilt für die Frequenzverschiebung Δf folgende Gleichung:

$$\Delta f = - 2 * fo * v / (c + v) \qquad (9)$$

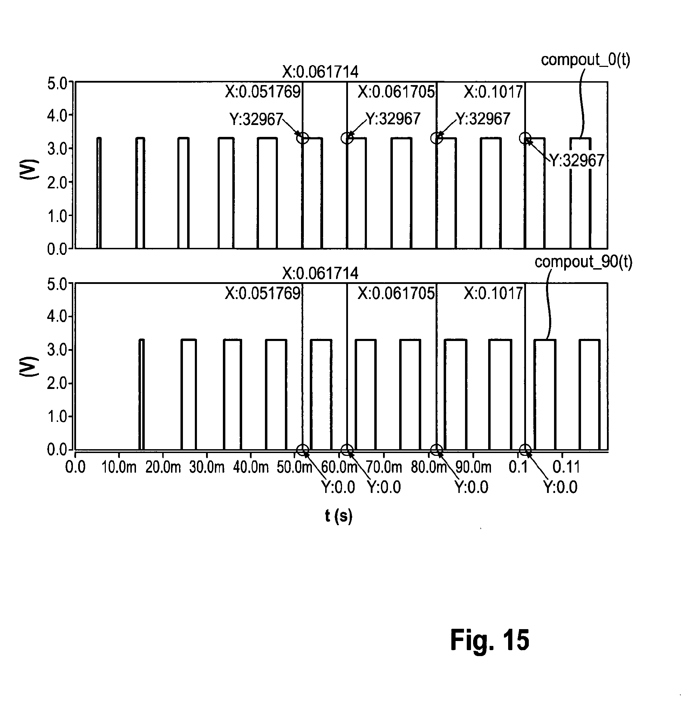

Fig. 15 zeigt zur Veranschaulichung der Bestimmung der Bewegungsgeschwindigkeit des Objekts die Ergebnisse einer Simulation. Dabei sind die Ausgangssignale compout_0(t) und compout_90(t) gegen die Zeit t aufgetragen. Für die Simulation wurde für die Frequenz f_doppler ein Wert von 39,9 kHz und die Frequenz fo ein Wert von 40 kHz verwendet. Aus der Frequenz, mit welcher sich die Rechtecke in den Ausgangssignalen compout_0(t) und compout_90(t) wiederholen, lässt sich der Betrag $|\Delta f|$ der Frequenzverschiebung bestimmen, indem beispielsweise, wie in Fig. 15 gezeigt, die Frequenz bestimmt wird, mit der sich die ansteigenden Flanken des Ausgangssignals compout_0(t) wiederholen. Alternativ können auch die abfallenden Flanken des Ausgangssignals compout_0(t) bzw. die ansteigenden oder abfallenden Flanken des Ausgangssignals compout_90(t) untersucht werden. In dem vorliegenden Beispiel ergab sich für den Betrag $|\Delta f|$ der Frequenzverschiebung ein Wert von 100,2 Hz. Daraus kann, wenn die Bewegungsrichtung des Objekts bekannt ist, die Bewegungsgeschwindigkeit des Objekts anhand der Gleichungen (8) oder (9) errechnet werden. Die Bewegungsrichtung kann aus der relativen Phasenlage der Ausgangssignale compout_0(t) und compout_90(t) bestimmt werden.

Zur Bestimmung der Bewegungsrichtung und -geschwindigkeit des Objekts wird beispielsweise zunächst aus den alten und neuen Zuständen der Ausgangssignale compout_0(t) und compout_90(t) ein Inkrement aus der Menge {-1; 0; 1} bestimmt. Ein Zähler wird anschließend gemäß folgender Gleichung inkrementiert: Zähler(t+1) = Zähler(t) + Inkrement. Der Zähler lässt sich periodisch auswerten, indem zu den Zeitpunkten t1 und t2 die Differenz der Zählerstände ermittelt wird: Zähler(t1) - Zähler(t2). Aus dem Betrag dieser Differenz lässt sich die Bewegungsgeschwindigkeit und aus dem Vorzeichen der Differenz die Bewegungsrichtung des Objekts, durch welches das Ultraschallsignal reflektiert wurde, bestimmen.

Im Folgenden werden beispielhafte Ausführungsformen der Schwellwertvergleicher 24 und 25 beschrieben.

Von den Tiefpassfiltern 22 und 23 werden jeweils Ausgangssignale geliefert, die aus einem Gleichspannungs- bzw. Durchschnittsanteil und einem dynamischen Anteil bestehen, wobei nur der dynamische Anteil die gesuchte Information beinhaltet.

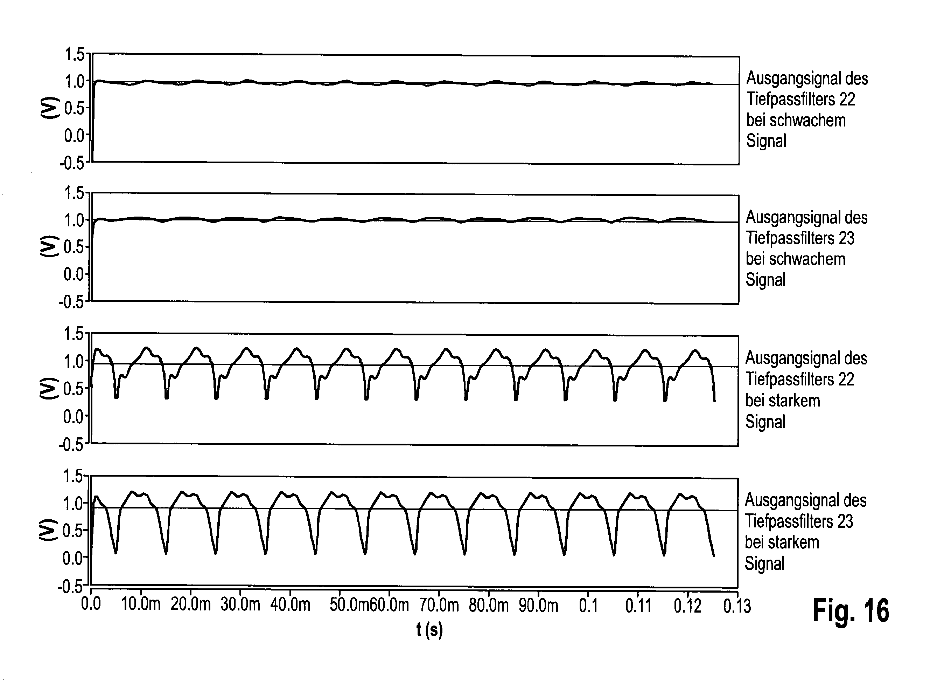

In Fig. 16 sind untereinander die Ausgangssignale der Tiefpassfilter 22 und 23 bei einem an dem bewegten Objekt schwach reflektierten Ultraschallsignal und die Ausgangssignale der Tiefpassfilter 22 und 23 bei einem an dem bewegten Objekt stark reflektierten Ultraschallsignal gegen die Zeit t aufgetragen. Wie Fig. 16 zeigt, ist der dynamische Anteil der Ausgangssignale der Tiefpassfilter 22 und 23 im Wesentlichen bestimmt durch das Verhältnis der Signalstärke des Ultraschallsignalanteils mit der Frequenz fo zur Signalstärke des Ultraschallsignalanteils mit der Frequenz f_doppler.

Um den Gleichspannungsanteil aus den Ausgangssignalen der Tiefpassfilter 22 und 23 zu eliminieren und dadurch die Auflösung des dynamischen Anteils zu erhöhen, kann ein Bandpassfilter verwendet werden, wobei der Hochpassanteil des Bandpassfilters den Gleichspannungsanteil dämpft. Danach wird das gefilterte Signal in einen Komparator mit einem festen Schwellwert eingegeben. Alternativ könnte ein Differenzverstärker verwendet werden, der auf den Gleichspannungsanteil des Ausgangssignals des Tiefpassfilters 22 bzw. 23 referenziert ist.

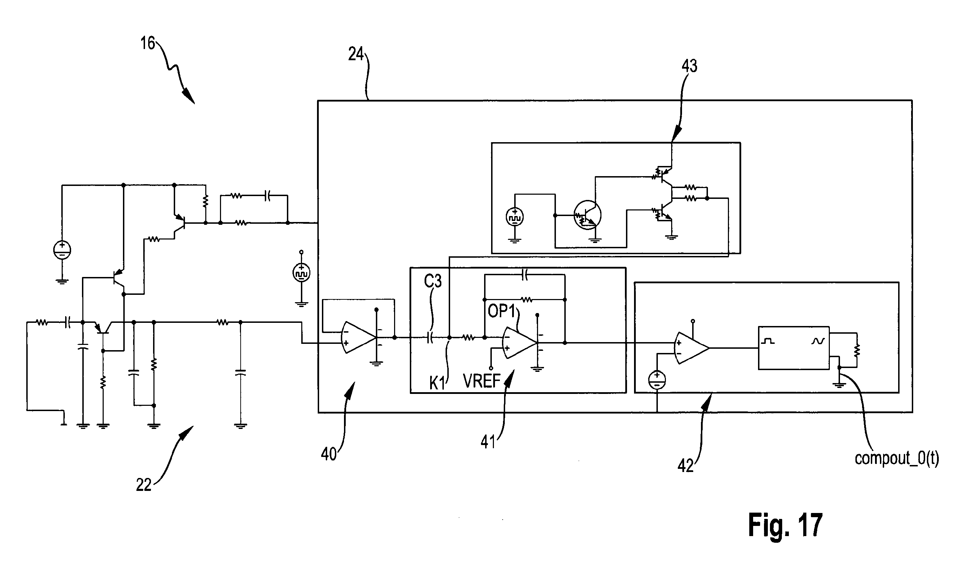

Fig. 17 zeigt ein Schaltbild einer Ausführungsform des Demodulators 16 mit dem wie in Fig. 10 ausgestalteten Tiefpassfilter 22 und dem nachgeschalteten Schwellwertvergleicher 24. Der Demodulator 17 mit dem Tiefpassfilter 23 und dem Schwellwertvergleicher 25 kann in der gleichen Weise realisiert sein.

Der Schwellwertvergleicher 24 umfasst eine als Spannungsfolger realisierte Pufferschaltung 40, einen Bandpassverstärker 41, einen Komparator 42 und eine Initialisierungsschaltung 43. Die Pufferschaltung 40, der Bandpassverstärker 41 und der Komparator 42 sind in Reihe geschaltet. Das Ausgangssignal des Tiefpassfilters 22 wird in die Pufferschaltung 40 eingespeist. Anschließend wird der Gleichspannungsanteil des Ausgangssignals des Tiefpassfilters 22 durch das Hochpassfilter des Bandpassverstärkers 41 gedämpft, und der verbleibende dynamische Anteil des Ausgangssignals des Tiefpassfilters 22 wird in dem Komparator 42 mit einem fest eingestellten Schwellwert verglichen. Der Schwellwert kann beispielsweise durch eine Spannung VREF gegeben sein. Am Ausgang des Komparators 42 wird das Ausgangssignal compout_0(t) ausgegeben.

Die Initialisierungsschaltung 43 dient dazu, den Bandpassverstärker 41 zu Beginn des Detektionsvorgangs zu initialisieren. Dazu wird ein am Eingang des Bandpassverstärkers 41 angeordneter Kondensator C3 von der Initialisierungsschaltung so aufgeladen, dass ein Knoten K1, der den Kondensator C3 mit einem Operationsverstärker OP1 des Bandpassverstärkers 41 verbindet, die Spannung VREF annimmt, die auch am Operationsverstärker OP1 anliegt. Das Ausgangssignal des Operationsverstärkers OP1, welches den Komparator 42 speist, ist dann gleich dem durch den Bandpassverstärker 41 verstärkten dynamischen Anteil des Ausgangssignals des Tiefpassfilters 22.

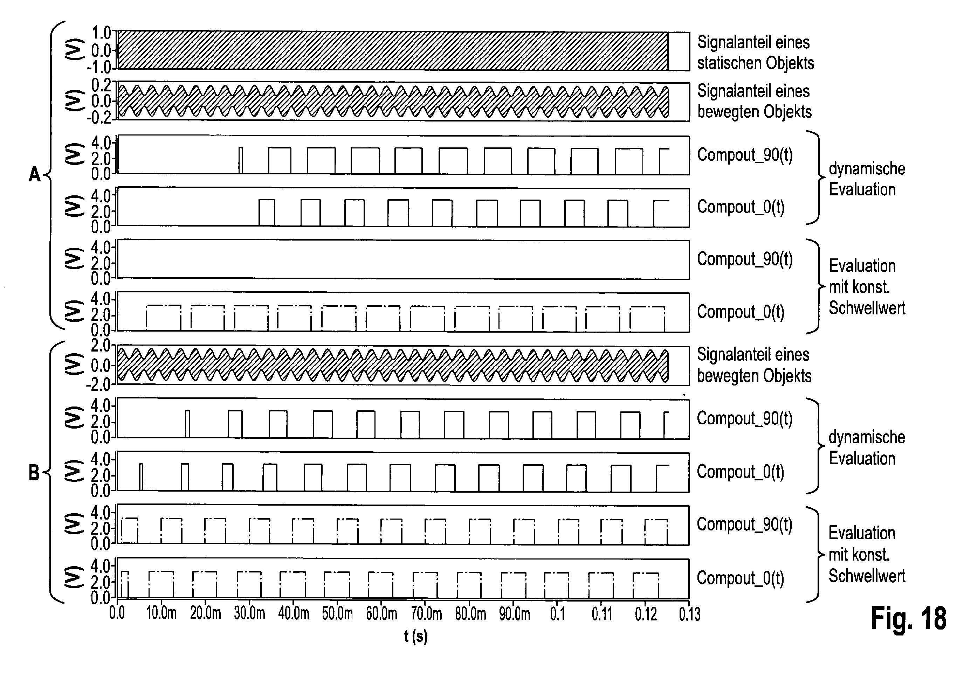

Zur Veranschaulichung der Funktionsweise des Demodulators 24 sind in Fig. 18 untereinander für Fälle A und B der am Ultraschallempfänger 12 empfangene Signalanteil des an einem statischen Objekt reflektierten Ultraschallsignals, der am Ultraschallempfänger 12 empfangene Signalanteil des an einem bewegten Objekt reflektierten Ultraschallsignals sowie die Ausgangssignale compout_90(t) und compout_0(t) für eine dynamische Evaluation und eine Evaluation mit konstantem Schwellwert gegen die Zeit t aufgetragen.

Für die Fig. 18 zugrunde liegende Simulation wurde angenommen, dass der Ultraschallsender 11 ein Ultraschallsignal s_TX(t) mit einer Frequenz fo = 40 kHz aussendet und dieses Signal sowohl an einem statischen Objekt als auch an einem bewegten Objekt reflektiert wird. Der am Ultraschallempfänger 12 empfangene Signalanteil des an dem statischen Objekt reflektierten Ultraschallsignals weist eine Amplitude von 1 V und eine Frequenz fo von 40 kHz auf.

Im Fall A wird das Ultraschallsignal an dem bewegten Objekt nur schwach reflektiert. Der am Ultraschallempfänger 12 empfangene Signalanteil des an dem bewegten Objekt reflektierten Ultraschallsignals weist eine Amplitude von 0,05 V und eine Frequenz f_doppler von 39,9 kHz auf. Dem betrachteten System wurde eine Störung hinzugefügt, wie sie beispielsweise durch Luftturbulenzen verursacht werden kann, indem die Signalanteile mit einer Frequenz von 300 Hz und einem Modulationsindex von 0,5 amplitudenmoduliert wurden.

Im Fall B wird das Ultraschallsignal an dem bewegten Objekt stark reflektiert, so dass der am Ultraschallempfänger 12 empfangene Signalanteil des an dem bewegten Objekt reflektierten Ultraschallsignals eine Amplitude von 0,5 V aufweist. Alle anderen Simulationsparameter entsprechen den Simulationsparametern des Falls A.

Im Fall A schlägt eine Evaluation mit einem konstanten Schwellwert fehl, wohingegen die dynamische Evaluation, wie sie mit dem in Fig. 17 dargestellten Demodulator 24 durchgeführt werden kann, es ermöglicht, die Bewegungsrichtung und Bewegungsgeschwindigkeit des bewegten Objekts zu detektieren. Im Fall B führt sowohl die Evaluation mit einem konstanten Schwellwert als auch die dynamische Evaluation zu aussagekräftigen Ergebnissen.

**Bezugzeichenliste**

| | |
|---|---|
| 1 | Ultraschallüberwachungsvorrichtung |
| 2 | Ultraschallsender |
| 3 | Ultraschallempfänger |
| 4 | Objekt |
| 5 | Objekt |
| 10 | Ultraschallüberwachungsvorrichtung |
| 11 | Ultraschallsender |
| 12 | Ultraschallempfänger |
| 13 | Taktgenerator |
| 14 | Limitierer |
| 15 | Synchronisationseinheit |
| 16 | Demodulator |
| 17 | Demodulator |
| 20 | Halbwellen-Gleichrichter |
| 21 | Halbwellen-Gleichrichter |
| 22 | Tiefpassfilter |
| 23 | Tiefpassfilter |
| 24 | Schwellwertvergleicher |
| 25 | Schwellwertvergleicher |
| 26 | Auswerteeinheit |
| 27 | Mikroprozessor |
| 28 | Ausschnitt |
| 30 | Gleichrichtereinheit |
| 31 | Steuereinheit |
| 32 | Pfeil |
| 33 | Pfeil |
| 35 | Gleichrichtereinheit |
| 40 | Pufferschaltung |
| 41 | Bandpassverstärker |
| 42 | Komparator |
| 43 | Initialisierungsschaltung |
| | |
| Tr1 | Transistor |
| Tr2 | Transistor |
| C1 | Kondensator |
| C2 | Kondensator |
| C3 | Kondensator |
| R1 | Widerstand |
| R2 | Widerstand |
| OP1 | Operationsverstärker |

**Patentansprüche**

1. Ultraschallüberwachungsvorrichtung (10) zur Bestimmung der Bewegungsrichtung und/oder der Bewegungsgeschwindigkeit eines Objekts, umfassend einen Ultraschallsender (11) und einen Ultraschallempfänger (12), wobei während des Betriebs der Ultraschallüberwachungsvorrichtung (10) der Ultraschallsender (11) ein Ultraschallsignal aussendet, das ausgesandte Ultraschallsignal an einem Objekt reflektiert wird und der Ultraschallempfänger (12) das reflektierte Ultraschallsignal empfängt,
**gekennzeichnet durch**
einen Taktgenerator (13) zur Erzeugung eines ersten Taktsignals und eines zweiten Taktsignals, wobei das erste Taktsignal und das zweite Taktsignal eine vorgegebene Phasendifferenz aufweisen,
einen ersten Demodulator (16) zur Demodulation des empfangenen Ultraschallsignals, wobei der erste Demodulator (16) in Abhängigkeit vom Zustand des ersten Taktsignals aktiviert oder deaktiviert ist und ein erstes Ausgangssignal ausgibt,
einen zweiten Demodulator (17) zur Demodulation des empfangenen Ultraschallsignals, wobei der zweite Demodulator (17) in Abhängigkeit vom Zustand des zweiten Taktsignals aktiviert oder deaktiviert ist und ein zweites Ausgangssignal ausgibt, und
eine Auswerteeinheit (26) zur Bestimmung der Bewegungsrichtung und/oder der Bewegungsgeschwindigkeit des Objekts anhand des ersten und des zweiten Ausgangssignals.

2. Ultraschallüberwachungsvorrichtung (10) nach Anspruch 1,
**gekennzeichnet durch**
eine Synchronisationseinheit (15) zur Erzeugung eines Synchronisationssignals aus dem empfangenen Ultraschallsignal, wobei das Synchronisationssignal den Taktgenerator (13) ansteuert und der Taktgenerator (13) die Phasen des ersten Taktsignals und des zweiten Taktsignals der Phase des Synchronisationssignals nachführt.

3. Ultraschallüberwachungsvorrichtung (10) nach Anspruch 2,
**dadurch gekennzeichnet, dass**
der Taktgenerator (13) das erste Taktsignal und das zweite Taktsignal derart erzeugt, dass die Phase des Synchronisationssignals mittig zwischen der Phase des ersten Taktsignals und der Phase des zweiten Taktsignals liegt.

4. Ultraschallüberwachungsvorrichtung (10) nach einem der vorgehenden Ansprüche,
**dadurch gekennzeichnet, dass**
der Taktgenerator (13) das von dem Ultraschallsender (11) auszusendende Ultraschallsignal erzeugt, wobei insbesondere die Frequenz des ersten Taktsignals und des zweiten Taktsignals gleich dem Quotienten aus der Frequenz des von dem Ultraschallsender auszusendenden Ultraschallsignals und einer positiven ganzen Zahl ist.

5. Ultraschallüberwachungsvorrichtung (10) nach einem der vorgehenden Ansprüche,
**dadurch gekennzeichnet, dass**
der erste Demodulator (16) einen ersten Gleichrichter (20) zur Gleichrichtung des empfangenen Ultraschallsignals aufweist, wobei der erste Gleichrichter (20) in Abhängigkeit vom Zustand des ersten Taktsignals aktiviert oder deaktiviert ist, und/oder
der zweite Demodulator (17) einen zweiten Gleichrichter (21) zur Gleichrichtung des empfangenen Ultraschallsignals aufweist, wobei der zweite Gleichrichter (21) in Abhängigkeit vom Zustand des zweiten Taktsignals aktiviert oder deaktiviert ist.

6. Ultraschallüberwachungsvorrichtung (10) nach Anspruch 5,
**dadurch gekennzeichnet, dass**
der erste Demodulator (16) ein erstes Tiefpassfilter (22) zur Tiefpassfilterung eines von dem ersten Gleichrichter (20) ausgegebenen Signals und einen ersten Schwellwertvergleicher (24) zum Vergleichen eines von dem ersten Tiefpassfilter (22) ausgegebenem Signals mit einem vorgegebenen Schwellwert aufweist, und/oder
der zweite Demodulator (17) ein zweites Tiefpassfilter (23) zur Tiefpassfilterung eines von dem zweiten Gleichrichter (21) ausgegebenen Signals und einen zweiten Schwellwertvergleicher (25) zum Vergleichen eines von dem zweiten Tiefpassfilter (23) ausgegebenem Signals mit dem vorgegebenen Schwellwert aufweist.

7. Ultraschallüberwachungsvorrichtung (10) nach einem der vorgehenden Ansprüche,
**dadurch gekennzeichnet, dass**
die Auswerteeinheit (26) derart ausgestaltet ist, dass sie anhand der Phasenbeziehung zwischen dem ersten und dem zweiten Ausgangssignal die Bewegungsrichtung des Objekts bestimmt, wobei die Auswerteeinheit (26) insbesondere anhand der Position eines der ersten und zweiten Ausgangsignale zu dem Zeitpunkt, zu dem das andere der ersten und zweiten Ausgangsignale eine ansteigende oder abfallende Flanke aufweist, die Bewegungsrichtung des Objekts bestimmt.

8. Ultraschallüberwachungsvorrichtung (10) nach einem der vorgehenden Ansprüche,
**dadurch gekennzeichnet, dass**
die Auswerteeinheit (26) derart ausgestaltet ist, dass sie die Bewegungsgeschwindigkeit des Objekts aus der Frequenz, mit der sich ein charakteristisches Merkmal in dem ersten und/oder zweiten Ausgangssignal wiederholt, bestimmt, wobei das charakteristische Merkmal insbesondere eine ansteigende oder abfallende Flanke ist.

9. Ultraschallüberwachungsvorrichtung (10) nach einem der vorgehenden Ansprüche,
**dadurch gekennzeichnet, dass**
das erste Taktsignal und das zweite Taktsignal jeweils einen ersten Zustand und einen zweiten Zustand aufweisen, wobei der erste Demodulator (16) während des ersten Zustands des ersten Taktsignals deaktiviert und während des zweiten Zustands des ersten Taktsignals aktiviert ist und wobei der zweite Demodulator (17) während des ersten Zustands des zweiten Taktsignals deaktiviert und während des zweiten Zustands des zweiten Taktsignals aktiviert ist.

10. Kraftfahrzeug mit einer Ultraschallüberwachungsvorrichtung (10) nach einem der vorhergehenden Ansprüche.

11. Ultraschallüberwachungsverfahren zur Bestimmung der Bewegungsrichtung und/oder der Bewegungsgeschwindigkeit eines Objekts, wobei ein Ultraschallsignal ausgesendet wird, das ausgesandte Ultraschallsignal an einem Objekt reflektiert wird und das reflektierte Ultraschallsignal empfangen wird,
**dadurch gekennzeichnet, dass**
ein erstes Taktsignal und ein zweites Taktsignal erzeugt werden, wobei das erste Taktsignal und das zweite Taktsignal eine vorgegebene Phasendifferenz aufweisen,
das empfangene Ultraschallsignal in einem ersten Demodulator (16) demoduliert wird, wobei der erste Demodulator (16) in Abhängigkeit vom Zustand des ersten Taktsignals aktiviert oder deaktiviert wird und ein erstes Ausgangssignal ausgibt,
das empfangene Ultraschallsignal in einem zweiten Demodulator (17) demoduliert wird, wobei der zweite Demodulator (17) in Abhängigkeit vom Zustand des zweiten Taktsignals aktiviert oder deaktiviert wird und ein zweites Ausgangssignal ausgibt, und
die Bewegungsrichtung und/oder die Bewegungsgeschwindigkeit des Objekts anhand des ersten und des zweiten Ausgangsignals bestimmt werden.

12. Ultraschallüberwachungsverfahren nach Anspruch 11,
**dadurch gekennzeichnet, dass**
ein Synchronisationssignal aus dem empfangenen Ultraschallsignal erzeugt wird und die Phasen des ersten Taktsignals und des zweiten Taktsignals der Phase des Synchronisationssignals nachgeführt werden.

13. Ultraschallüberwachungsverfahren nach Anspruch 11 oder 12,
**dadurch gekennzeichnet, dass**
der erste Demodulator (16) einen ersten Gleichrichter (20) zur Gleichrichtung des empfangenen Ultraschallsignals aufweist, wobei der erste Gleichrichter (20) in Abhängigkeit vom Zustand des ersten Taktsignals aktiviert oder deaktiviert wird, und/oder
der zweite Demodulator (17) einen zweiten Gleichrichter (21) zur Gleichrichtung des empfangenen Ultraschallsignals aufweist, wobei der zweite Gleichrichter (21) in Abhängigkeit vom Zustand des zweiten Taktsignals aktiviert oder deaktiviert wird.

14. Ultraschallüberwachungsverfahren nach einem der Ansprüche 11 bis 13, **dadurch gekennzeichnet, dass** anhand der Position eines der ersten und zweiten Ausgangsignale zu dem Zeitpunkt, zu dem das andere der ersten und zweiten Ausgangsignale eine ansteigende oder abfallende Flanke aufweist, die Bewegungsrichtung des Objekts bestimmt wird.

15. Ultraschallüberwachungsverfahren nach einem der Ansprüche 11 bis 14, **dadurch gekennzeichnet, dass** die Bewegungsgeschwindigkeit des Objekts aus der Frequenz, mit der sich ein charakteristisches Merkmal in dem ersten und/oder zweiten Ausgangssignal wiederholt, bestimmt wird, wobei das charakteristische Merkmal insbesondere eine ansteigende oder abfallende Flanke ist.

**Fig. 1**

**Fig. 2**

Fig. 3

Fig. 4

Fig. 5A

Fig. 5B

Bewegung von Empfänger weg          Bewegung auf den Empfänger zu

compout_90(t) - compout_0(t)          compout_90(t)

compout_0(t)

t (s)

**Fig. 5C**

Bewegung von Empfänger weg          Bewegung auf den Empfänger zu

compout_90(t)

compout_0(t)

t (s)

**Fig. 6**

Fig. 7A

Fig. 7B

Fig. 8

Fig. 9

**Fig. 10**

Signalanteil eines stationären Objekts

Signalanteil eines bewegten Objekts

empfangenes Ultraschallsignal

Eingangssignal des Limitierers 14

slim(t)

compout_0(t)

compout_90(t)

t (s)

Fig. 11

Fig. 12

**Fig. 13**

Fig. 14

EP 3 043 192 A1

**Fig. 15**

Ausgangsignal des Tiefpassfilters 22 bei schwachem Signal

Ausgangsignal des Tiefpassfilters 23 bei schwachem Signal

Ausgangsignal des Tiefpassfilters 22 bei starkem Signal

Ausgangsignal des Tiefpassfilters 23 bei starkem Signal

t (s)

Fig. 16

EP 3 043 192 A1

Fig. 17

Fig. 18

Europäisches Patentamt

European Patent Office

Office européen des brevets

## EUROPÄISCHER RECHERCHENBERICHT

Nummer der Anmeldung

EP 15 15 0531

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 31 38 723 A1 (SIEMENS AG [DE]) 7. April 1983 (1983-04-07) * Zusammenfassung * * Seite 8, Zeile 26 - Zeile 28 * * Seite 9, Zeile 17 - Zeile 18 * ----- | 1-15 | INV. G01S15/58 G01S7/523 G01S15/62 G01S15/88 G01S15/52 |
| Y | EP 0 446 385 A1 (SIEMENS AG [DE]) 18. September 1991 (1991-09-18) * Zusammenfassung * ----- | 1-15 | G01S7/54 |
| Y | WO 88/01850 A1 (VITAL SCIENCE CORP [US]) 24. März 1988 (1988-03-24) * Zusammenfassung * * Seite 5, Zeile 4 - Zeile 14 * * Seite 9, Zeile 7 - Zeile 11 * * Seite 10, Zeile 17 - Zeile 19 * * Seite 10, Zeile 35 - Zeile 37 * * Seite 11, Zeile 3 - Zeile 8 * * Seite 11, Zeile 29 - Zeile 33 * * Seite 13, Zeile 5 - Zeile 9 * * Seite 13, Zeile 35 - Zeile 38 * ----- | 1-15 | |

RECHERCHIERTE SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 2. Juli 2015 | Alberga, Vito |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 0531

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-07-2015

| Im Recherchenbericht angeführtes Patentdokument | | Datum der Veröffentlichung | Mitglied(er) der Patentfamilie | | | Datum der Veröffentlichung |
|---|---|---|---|---|---|---|
| DE 3138723 | A1 | 07-04-1983 | KEINE | | | |
| EP 0446385 | A1 | 18-09-1991 | AT | 127603 | T | 15-09-1995 |
| | | | DE | 59009633 | D1 | 12-10-1995 |
| | | | DK | 0446385 | T3 | 15-01-1996 |
| | | | EP | 0446385 | A1 | 18-09-1991 |
| | | | ES | 2075857 | T3 | 16-10-1995 |
| | | | GR | 3017397 | T3 | 31-12-1995 |
| WO 8801850 | A1 | 24-03-1988 | AU | 7966687 | A | 07-04-1988 |
| | | | CA | 1277022 | C | 27-11-1990 |
| | | | EP | 0323968 | A1 | 19-07-1989 |
| | | | GB | 2213265 | A | 09-08-1989 |
| | | | JP | H02500952 | A | 05-04-1990 |
| | | | US | 4807636 | A | 28-02-1989 |
| | | | WO | 8801850 | A1 | 24-03-1988 |

EPO FORM P0461

Für nähere Einzelheiten zu diesem Anhang : siehe Amtsblatt des Europäischen Patentamts, Nr.12/82